**Europäisches Patentamt**

(19) **European Patent Office**

**Office européen des brevets**

(11) Numéro de publication : **0 288 379 B1**

(12) **FASCICULE DE BREVET EUROPEEN**

(45) Date de publication du fascicule du brevet :
06.03.91 Bulletin 91/10

(51) Int. Cl.⁵ : **B60H 1/00**

(21) Numéro de dépôt : **88400957.2**

(22) Date de dépôt : **20.04.88**

(54) **Boîtier en matière plastique moulée pour dispositif de chauffage et de ventilation, notamment pour véhicule automobile, et procédé pour son assemblage.**

(30) Priorité : **24.04.87 FR 8705859**

(43) Date de publication de la demande :
**26.10.88 Bulletin 88/43**

(45) Mention de la délivrance du brevet :
**06.03.91 Bulletin 91/10**

(84) Etats contractants désignés :
**DE ES GB IT**

(56) Documents cités :
**EP-A- 0 173 598**
**DE-A- 3 107 324**
**FR-A- 2 039 732**
**GB-A- 2 065 866**

(73) Titulaire : **VALEO**
**64 Avenue de la Grande Armée**
**F-75017 Paris (FR)**

(72) Inventeur : **Danieau, Jacques**
**28, Allée du Hameau Fleuri**
**F-78590 Noisy-Le Roi (FR)**

## Description

L'invention concerne un boîtier en matière plastique moulée pour un dispositif de chauffage et de ventilation, notamment pour véhicule automobile, ainsi qu'un procédé pour l'assemblage d'un tel boîtier.

Elle concerne plus précisément un boîtier du type comprenant deux parties de forme générale symétrique par rapport à un plan moyen de séparation, constitué par une cloison séparatrice dans lequel chaque partie comprend une conduite d'entrée d'air frais et des conduites de sortie d'air, le boîtier étant propre à loger des moyens de réglage de la distribution et de la température de l'air sortant par les conduites de sortie respectives des deux parties de boîtier.

On connaît déjà, par DE-A1-31 07 324, des dispositifs de chauffage et de ventilation dans lesquels chacune des deux parties du boîtier comprend en outre une branche de transmission d'air frais interposée entre la conduite d'entrée et les conduites de sortie, une branche de réchauffage d'air interposée entre la conduite d'entrée et les conduites de sortie et contenant un échangeur de chaleur, ainsi qu'un volet de mixage ou de réglage de température disposé à la jonction de la conduite d'entrée et des branches de transmission d'air frais et de réchauffage d'air, afin de faire varier la répartition entre ces deux branches du débit d'air arrivant par la conduite d'entrée et par conséquent la température de l'air sortant par les conduites de sortie. Dans de tels dispositifs, il est en général prévu un seul échangeur de chaleur qui s'étend dans les branches de réchauffage d'air respectives des deux parties du boîtier, cet échangeur de chaleur étant constitué habituellement par un radiateur parcouru par un fluide chaud, par exemple de l'eau chaude, ayant servi au refroidissement du moteur du véhicule.

Par ailleurs, chacune des deux parties du boîtier comprend le plus souvent trois conduites de sortie d'air destinées à envoyer de l'air frais ou réchauffé respectivement vers des aérateurs situés au niveau de la planche de bord, vers le pare-brise pour le désembuage ou le dégivrage de celui-ci et vers la partie inférieure de l'habitacle. Chacune des deux parties du boîtier comprend en outre généralement deux volets de distribution pour assurer la répartition de l'air frais ou réchauffé vers les différentes conduites de sortie en fonction du mode de chauffage ou d'aération souhaité.

Du fait que chacune des deux parties du boîtier comprend ses propres conduites de sortie et son propre volet de mixage, on peut affecter une partie du boîtier au chauffage et à la ventilation d'une des deux places avant de l'habitacle du véhicule et l'autre partie du boîtier au chauffage et à la ventilation de l'autre place avant.

Les dispositifs de chauffage et d'aération de ce type sont habituellement montés sur des véhicules de haut de gamme en offrant ainsi la possibilité aux occupants des deux places avant du véhicule, à savoir le conducteur et son passager, de pouvoir sélectionner chacun la température de l'air de chauffage ou de ventilation qui leur convient, sans toutefois pouvoir régler indépendamment chacun la distribution de l'air.

En effet, seuls les deux volets de mixage peuvent être réglés indépendamment l'un de l'autre, tandis que les volets de distribution sont toujours synchronisés et réglés uniquement par l'un des occupants des places avant, habituellement le conducteur.

Les boîtiers qui font partie de ces dispositifs connus ont été fabriqués jusqu'à présent, par assemblage de pièces en matière plastique moulée qui correspondent respectivement aux deux parties de boîtier. Compte tenu de la symétrie des deux parties de boîtier, les pièces moulées constituant l'une des deux parties sont des homologues symétriques des pièces moulées constituant l'autre partie du boîtier.

Pour réaliser l'assemblage complet d'un tel boîtier, les deux parties qui le constituent sont assemblées séparément et au cours d'opérations quasiment identiques. Puis les deux parties sont réunies l'une à l'autre en emprisonnant la cloison séparatrice.

Un tel boîtier nécessite, pour son assemblage, un grand nombre d'opérations dont certaines sont nécessairement manuelles et lors de son assemblage oblige à retourner au moins une partie pour liaisons avec l'autre partie. Par conséquent, un tel assemblage est inapproprié dans une production en grande série et à grande vitesse sur une chaîne de fabrication automatisée moderne.

C'est l'un des buts de l'invention de procurer un boîtier du genre précité qui peut être assemblé facilement et rapidement et avec un minimum d'opérations, et cela au moyen d'installations robotisées.

C'est un autre but de l'invention de procurer un tel boîtier qui peut être utilisé aussi bien pour un dispositif de chauffage et d'aération d'un véhicule automobile, du type à réglage de température séparé pour les places avant, ou encore du type à réglage de température unique pour les places avant.

Selon un premier aspect, l'invention a pour objet un boîtier en matière plastique moulée pour dispositif de chauffage et de ventilation, notamment pour véhicule automobile, comprenant deux parties ayant chacune une paroi latérale dont une extrémité est ouverte et dont l'autre extrémité est fermée, lesdites parties étant de forme générale symétrique par rapport à un plan moyen de séparation, chaque partie comprenant une conduite d'entrée d'air frais et des conduites de sortie d'air, le boîtier étant propre à loger des moyens de réglage de la distribution et de la température de l'air sortant par les conduites de sortie.

Selon la caractéristique essentielle de l'invention, ce boîtier comprend :

— un premier demi-boîtier ayant une paroi latérale dont une extrémité est ouverte et dont l'autre extrémité est fermée par une paroi de fond réalisée d'une seule pièce avec la paroi latérale et propre à constituer une paroi d'extrémité du boîtier ;

– un deuxième demi-boîtier ayant une paroi latérale dont une extrémité est ouverte et dont l'autre extrémité est fermée par une paroi de fond réalisée d'une seule pièce avec la paroi latérale et propre à venir fermer au moins en partie l'extrémité ouverte du premier demi-boîtier en formant une cloison de séparation entre le premier demi-boîtier et le deuxième demi-boîtier ; et

– un couvercle propre à fermer l'extrémité ouverte du deuxième demi-boîtier et à constituer l'autre paroi d'extrémité du boîtier.

Les différentes parties constitutives d'un tel boîtier peuvent être fabriquées facilement par moulage d'une matière plastique et être ensuite facilement assemblées par soudage.

Dans certains cas particuliers, la paroi latérale du premier demi-boîtier définit une zone de section plus large adjacente à son extrémité fermée et une zone de section plus étroite adjacente à son extrémité ouverte, une paroi transversale reliant entre elles la zone de section plus large à la zone de section plus étroite. Cette augmentation de l'encombrement latérale du boîtier à proximité de la paroi d'extrémité du premier demi-boîtier – et également à proximité de la paroi d'extrémité du deuxième demi-boîtier – est due généralement à la présence des deux conduites d'air de sortie qui sont destinées à distribuer l'air frais ou réchauffé respectivement en partie basse de l'habitacle et en partie haute vers une bouche de dégivrage ou de désembuage.

L'invention prévoit alors que le premier demi-boîtier est réalisé en deux parties, à savoir une partie principale qui comprend la paroi de fond et une partie de la paroi latérale et une partie intermédiaire qui comprend ladite paroi intermédiaire et une partie de la paroi latérale proche de son extrémité ouverte.

Selon une autre caractéristique de l'invention, le boîtier est destiné à un dispositif de chauffage dans lequel les moyens de réglage de la distribution et de la température de l'air sortant par les conduites de sortie comprend des volets de mixage et des volets de distribution, la paroi de fond du premier demi-boîtier, la paroi de fond du deuxième demi-boîtier et le couvercle comportant alors des orifices de passage pour les axes des volets de mixage et des volets de distribution.

Avantageusement, l'invention prévoit que le boîtier est propre à recevoir les commandes des volets d'un même côté du boîtier, de préférence du côté du couvercle du boîtier.

Selon une autre caractéristique de l'invention, les deux conduites d'entrée d'air sont situées adjacentes tout en étant séparées par une cloison de séparation et sont propres à être reliées à la sortie de la volute d'un groupe moto-ventilateur.

Selon un autre aspect, l'invention concerne un procédé d'assemblage d'un boîtier tel que défini précédemment, ce procédé consistant à empiler successivement, et suivant une seule direction, d'abord le premier demi-boîtier, ensuite le deuxième demi-boîtier de sorte que son extrémité fermée vienne obturer l'extrémité ouverte du premier demi-boîtier et enfin le couvercle de manière à fermer l'extrémité ouverte du deuxième demi-boîtier.

Dans le cas où le premier demi-boîtier est constitué par une partie principale et une partie intermédiaire, le procédé consiste à empiler successivement la partie principale du premier demi-boîtier contenant éventuellement des volets, la partie intermédiaire du premier demi-boîtier, ensuite le deuxième demi-boîtier contenant éventuellement des volets et enfin le couvercle.

De préférence, l'empilement des parties constitutives du boîtier se fait en direction verticale descendante, le premier demi-boîtier étant disposé sur une table avec son extrémité ouverte dirigée vers le haut, les autres éléments du boîtier étant déplacés verticalement de haut en bas.

Dans la description qui suit, donnée seulement à titre d'exemple, on se réfère aux dessins annexés, sur lesquels :

– la figure 1 est une vue latérale d'un boîtier faisant partie d'un dispositif de chauffage et de ventilation d'un véhicule automobile et d'un boîtier d'un groupe moto-ventilateur, les parois latérales respectives des deux boîtiers étant enlevées pour faciliter la compréhension ;

– la figure 2 est une vue de dessus du boîtier du dispositif de chauffage et de ventilation ;

– la figure 3 est une vue latérale montrant schématiquement l'assemblage par empilement des différentes parties constitutives du boîtier ;

– la figure 4 est une vue de dessus analogue à celle de la figure 2, montrant le boîtier assemblé et comportant les différents volets de mixage et de distribution ;

– la figure 5 est une vue latérale d'un levier de commande de volets ;

– la figure 6 est une vue partielle suivant la flèche F de la figure 4 et montrant la commande des deux volets de mixage dans le cas où ceux-ci sont à commande séparée ;

– la figure 7 est une vue d'un des leviers de commande des volets de mixage de la figure 6 ;

– la figure 8 est une vue analogue à celle de la figure 6, dans le cas où les deux volets de mixage sont à commande unique ; et

– la figure 9 est une vue du levier de commande des deux volets de la figure 8.

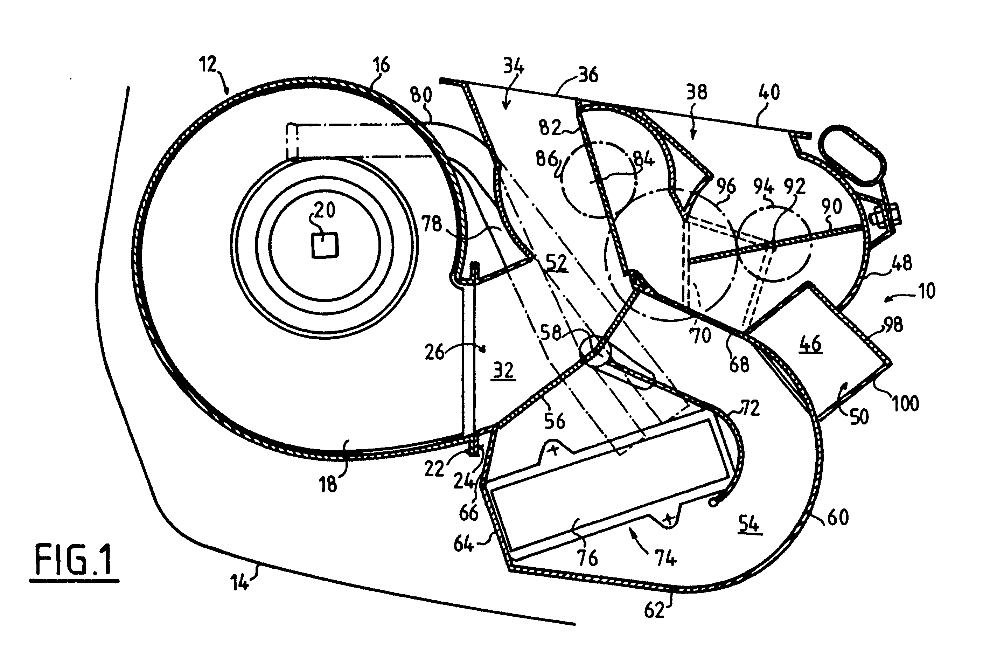

On se réfère tout d'abord à la figure 1 qui représente un boîtier 10 en matière plastique moulée faisant partie d'un dispositif de chauffage et de ventilation d'un véhicule automobile et qui est relié à la sortie d'un boîtier 12 faisant partie d'un groupe moto-ventilateur. Les boîtiers 10 et 12 sont logés dans le compartiment moteur du véhicule, tout en étant séparés du moteur par une cloison 14. Le boîtier 12 est limité par une paroi 16 à génératrice parallèle et en forme de volute qui se raccorde à deux parois latérales parallèles dont une seule, à savoir la paroi 18 est visible sur la figure 1. Le boîtier 12 est propre à loger intérieurement un ventilateur (non représenté) propre à être entraîné en rotation autour d'un axe 20 par l'intermédiaire d'un moteur (non représenté). Des moyens de commande sont prévus, de manière classique, à la planche de bord du véhicule pour régler la vitesse de fonctionnement du ventilateur.

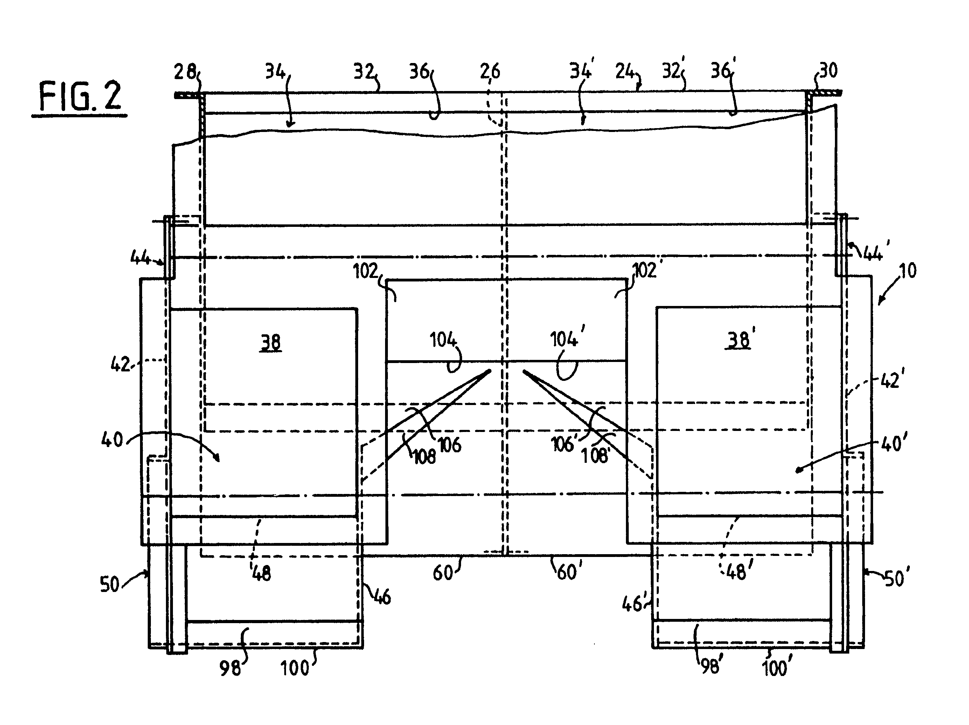

Le boîtier 12 comporte un embout de sortie 22 à contour général rectangulaire propre à être relié à un embout d'entrée 24 de forme correspondante faisant partie du boîtier 10. Ce dernier comprend deux parties de forme générale symétrique par rapport à un plan moyen de séparation qui est matérialisé par une cloison 26 qui s'étend parallèlement au plan de la feuille (figure 1) et perpendiculairement au plan de la feuille (figure 2). L'embout d'entrée 24 est limité latéralement par deux bords rabattus parallèles 28 et 30 qui s'étendent dans le plan de joint des embouts 22 et 24 (figure 2). L'air mis en mouvement par le ventilateur logé à l'intérieur du boîtier 12 quitte ce dernier par son embout de sortie 22 et pénètre dans l'embout d'entrée 24 du boîtier 10 où il est divisé en deux flux distincts en raison de la présence de la cloison 26.

La partie gauche du boîtier 10 comprend une conduite d'entrée d'air 32 dont l'accès est limité par le bord rabattu 28, la cloison 26 et deux autres bords rabattus de l'embout d'entrée 24. De façon correspondante, l'autre partie du boîtier comprend une conduite d'air 32' limitée par le bord rabattu 30, la cloison 26 et les deux autres bords de l'embout d'entrée 24. Les conduites 32 et 32' sont destinées à recevoir de l'air frais en provenance du groupe moto-ventilateur. Les deux parties du boîtier 10 comprennent en outre deux conduites de sortie d'air 34 respectivement 34' qui sont séparées par la cloison 26 (figure 2). Les conduites 34 et 34' débouchent respectivement sur deux aérateurs 36 et 36' situés au niveau de la planche de bord du véhicule. Ces deux aérateurs ont un contour général rectangulaire et sont également séparés par la cloison 26. Les deux parties du boîtier comprennent également deux autres conduites de sortie 38 et 38' qui débouchent respectivement sur deux bouches de sortie 40 et 40' (figure 2) situées vers le pare-brise pour assurer le désembuage ou le dégivrage de celui-ci. Les bouches 40 et 40' sont situées à distance l'une de l'autre, et présentent chacune une ouverture de forme générale rectangulaire. La conduite 38 est limitée, au voisinage de la bouche 40, par une paroi latérale 42 faisant partie de la paroi d'extrémité 44 du côté gauche du boîtier et par une paroi intermédiaire 46. De façon correspondante, la conduite 38' est limitée, à proximité de la bouche de sortie 40', par une paroi 42' faisant partie de l'autre paroi d'extrémité 44' du côté droit du boîtier et par une paroi intermédiaire 46'. Les parois intermédiaires 46 et 46' sont à distance l'une de l'autre et se raccordent en particulier à des parois cylindriques 48 et 48' qui font partie des parois latérales du boîtier en définissant des zones de section plus larges.

Le boîtier définit en outre deux autres conduites de sortie 50 et 50', de section rectangulaire, qui sont propres à distribuer de l'air frais ou réchauffé vers la partie inférieure de l'habitacle, respectivement dans la région des pieds du conducteur et dans la région des pieds du passager.

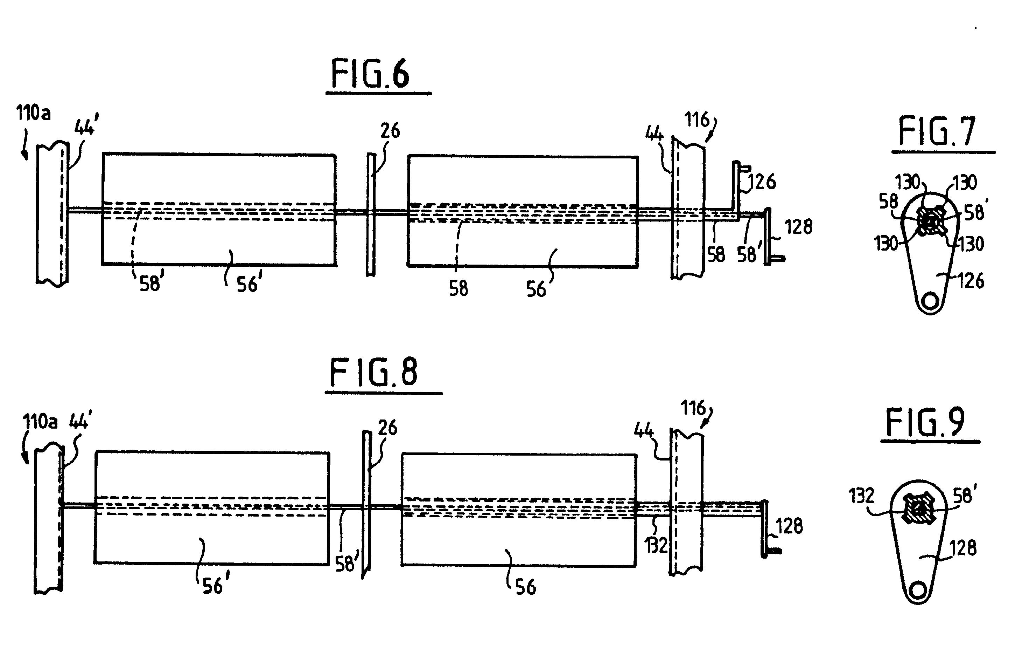

La partie gauche du boîtier 10 comprend en outre une branche 52 de transmission d'air frais interposée entre la conduite d'entrée 32 et les conduites de sortie 34, 38 et 50 ainsi qu'une branche de réchauffage d'air 54 interposée entre la conduite d'entrée 32 et les conduites de sortie 34, 38 et 50. La branche 52 de transmission d'air frais et la branche 54 de réchauffage d'air communiquent entre elles par une zone de mixage dans laquelle un volet de mixage 56 est prévu à la jonction de la conduite d'entrée 32 et des deux branches 52 et 54 afin de faire varier la répartition entre ces deux branches du débit d'air arrivant par la conduite d'entrée 32 et par conséquent la température de l'air sortant par les conduites de sortie 34, 38 et 50. De façon correspondante, l'autre partie du boîtier comprend des branches analogues aux branches 52 et 54 et un volet de mixage 56' (figure 6) analogue au volet 56. Les volets 56 et 56' sont montés pivotant autour d'axes respectifs 58 et 58' situés dans le prolongement l'un de l'autre et perpendiculairement au plan de la feuille de la figure 1. La branche de réchauffage d'air 54 est limitée extérieurement par la paroi de la partie du boîtier 10 correspondante, cette paroi comprenant notamment une portion cylindrique 60 qui se rattache d'une part à l'embout d'entrée 24 par une portion plane 62 et par deux autres portions planes 64 et 66 (figure 1) et d'autre part à deux autres parois planes 68 et 70. La paroi cylindrique 60, et les parois planes 68 et 70 font partie de la paroi latérale du boîtier dans laquelle celui-ci définit une zone de section plus étroite que celle de la section plus large définie précédemment.

La branche de réchauffage d'air 54, de même que la branche de réchauffage d'air de l'autre partie correspondante, ont une forme générale en U à l'intérieur de laquelle est placée une cloison de séparation 72. Les branches de réchauffage d'air 54 et 54' définissent ensemble un logement pour un échangeur de chaleur 74 qui s'étend sur toute la largeur du boîtier 10 de manière à pouvoir assurer le réchauffage de l'air aussi bien dans la partie droite du boîtier que dans sa partie gauche. L'échangeur 74 est constitué par un radiateur propre à être parcouru par un fluide chaud, par exemple, de l'eau chaude, ayant servi au refroidissement du moteur du véhicule. L'échangeur 74 comprend une boîte à eau 76 reliée à une tubulure d'entrée 78 et à une tubulure de sortie 80.

La répartition de l'air distribué par les conduites de sortie 34 et 34', 38 et 38' ainsi que 50 et 50' est assurée par des volets de distribution. Ces volets comprennent deux volets 82 et 82' solidaires d'un axe commun 84 sur lequel est calé un pignon 86 (figure 1). Les volets 82 et 82' constituent des volets d'aération ou de distribution qui permettent d'amener l'air frais ou réchauffé soit vers les conduites de sortie 34 et 34', soit vers deux conduites 88 et 88' qui sont propres à communiquer avec d'une part les conduites 38 et 50 et d'autre part les conduites 38' et 50', soit encore pour distribuer cet air à la fois vers les conduites 38 et 38' et vers les conduites 88 et 88' L'air ainsi amené par les conduites 88 et 88' peut ensuite être réparti vers les conduites 38 et 38' d'une part et 50 et 50' d'autre part par deux volets 90 et 90' solidaires d'un axe commun 92. Sur cet axe 92 est calé un pignon 94. Les pignons 86 et 94 peuvent être entraînés par l'intermédiaire d'un pignon 96.

Dans la configuration décrite précédemment les volets 82' et 90' sont toujours dans la même position que les volets 82 et 90 correspondants, si bien que la distribution du côté droit ou du côté gauche de l'habitacle est toujours la même. En revanche, le volet 56' peut prendre des positions différentes ou non différentes selon que les volets 56 et 56' ont des commandes indépendantes ou au contraire une commande unique.

On se réfère maintenant à la figure 2 qui représente le boîtier 10 en vue de dessus et à l'état assemblé. Ce boîtier est constitué de deux parties généralement symétriques par rapport au plan de la cloison 26. Ces deux parties symétriques présentent chacune une paroi latérale à génératrices parallèles qui s'étende perpendiculairement au plan de la cloison 26. Dans les zones de section plus larges définies précédemment, les conduites 50 et 50' sont en outre délimitées latéralement respectivement par des parois 98 et 100 d'une part et 98' et 100' d'autre part.

Dans la région où la paroi latérale présente une section plus étroite, comme définie précédemment, cette paroi latérale est en outre définie par deux portions de paroi 102 et 104 respectivement 102' et 104', les portions de paroi 104 et 104' se raccordant avec les portions 70 et 70'.

Par ailleurs, des parois obliques 106 et 108 raccordent la paroi intermédiaire 46 à la paroi 70 tandis que des parois obliques 106' et 108' raccordent la paroi intermédiaire 46' à la paroi 70'.

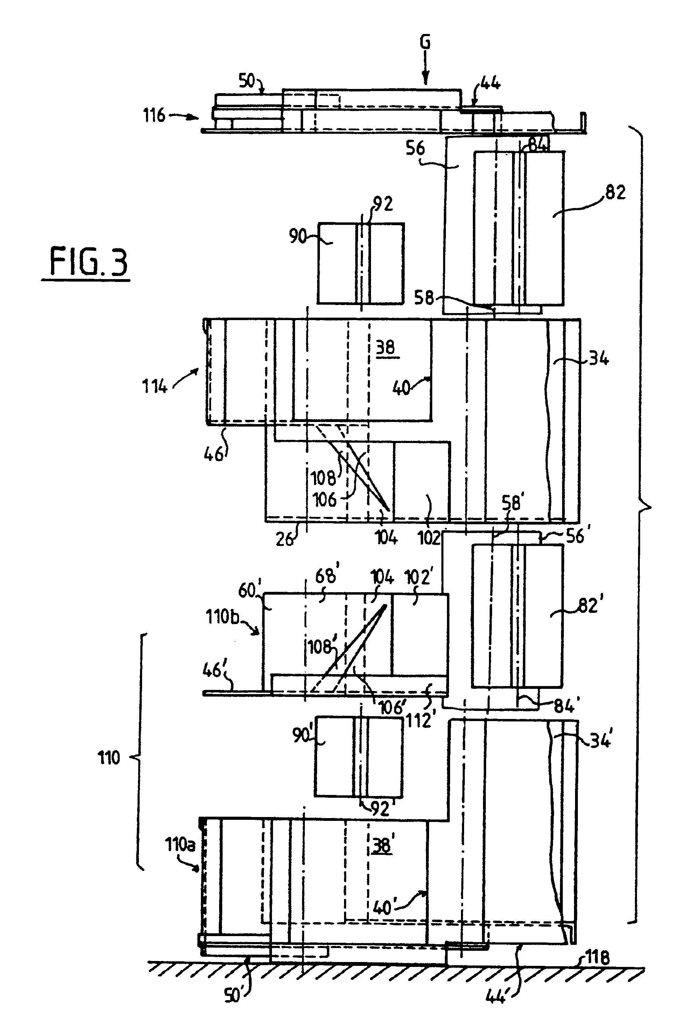

On se réfère maintenant à la figure 3 qui montre les différentes parties constitutives du boîtier 10 et la manière dont ces parties sont assemblées par empilement.

Le boîtier 10 comprend un premier demi-boîtier 110 qui est lui-même constitué d'une partie principale 110a et d'une partie intermédiaire 110b. La partie principale 110a comprend une paroi latérale à génératrice parallèle qui définit la totalité de la zone de section plus large définie précédemment et une partie de la zone de section plus étroite définie précédemment. Cette paroi latérale est ouverte à une extrémité et est fermée à son autre extrémité par une paroi de fond qui correspond à la paroi d'extrémité 44' (figure 2). La paroi latérale de la partie principale 110a est réalisée d'une seule pièce avec la paroi de fond 44', cette dernière comportant des orifices pour le passage des axes respectifs des volets 56', 82' et 90'.

La partie intermédiaire 110b définit une portion de la paroi latérale de section plus étroite, cette portion étant définie par une partie de la paroi cylindrique 60', les parois 68', 70', 104' et 102' et également par les parois 106' et 108', les parois précitées se raccordant à la paroi intermédiaire 46'. Par ailleurs, cette partie intermédiaire 110b définit un des bords 112' de la bouche 40'. En outre, la cloison intermédiaire 46' comprend un orifice pour le passage de l'axe 92' du volet 90'.

Lorsque les parties 110a et 110b sont réunies, elles définissent ensemble un demi-boîtier, à savoir le demi-boîtier droit, comprenant une paroi latérale dont une extrémité est ouverte et limitée par un plan de joint et dont l'autre extrémité est fermée par la paroi 44'.

Le boîtier 10 est en outre défini par un deuxième demi-boîtier 114 formé d'une seule pièce et ayant une forme générale symétrique de celle du boîtier 110 tel qu'obtenu par la réunion des parties 110a et 110b. Toutefois, dans ce cas particulier, la paroi latérale du demi-boîtier 114 est fermée, non pas à son extrémité côté extérieur, mais à son extrémité côté intérieur. Cette paroi d'extrémité correspond à la cloison 26 qui sépare les deux demi-boîtiers lorsque ceux-ci sont réunis entre eux. Cette paroi comporte des orifices pour le passage des axes respectifs des volets 82', 56', 90, 82 et 56.

L'autre extrémité du demi-boîtier 114 est ouverte et propre à recevoir un couvercle 116 qui comprend notamment la paroi d'extrémité 44 et qui présente des orifices pour le passage des axes des volets 56, 82 et 90.

Pour réaliser l'assemblage des éléments 110a, 110b, 114 et 116 qui constituent le boîtier 10, on procède de la façon suivante.

Tout d'abord, on place la partie principale 110a sur un support horizontal 118, tel qu'une table, de manière que l'extrémité ouverte de la partie 110a soit dirigée vers le haut. On rapporte ensuite la partie intermédiaire 110b sur la partie 110a en la déposant dans le sens indiqué par la flèche G, c'est-à-dire par un mouvement vertical de haut en bas. On emprisonne en même temps le volet 90' dans l'espace limité entre la paroi 44' et la paroi 46'. On place éga-

lement les volets 82' et 56' dans les emplacements correspondants.

Ensuite, on dépose le deuxième demi-boîtier 114 de manière que sa paroi de fond, qui constitue la cloison de séparation 26, vienne obturer l'extrémité ouverte du boîtier 110.

Ensuite, on place les volets 56, 82 et 90 dans les emplacements correspondants, puis on met en place le couvercle, en procédant toujours par empilement suivant la direction de la flèche G.

Les éléments 110a, 110b, 114 et 116 sont ensuite liés ensemble, par exemple par soudage aux ultrasons.

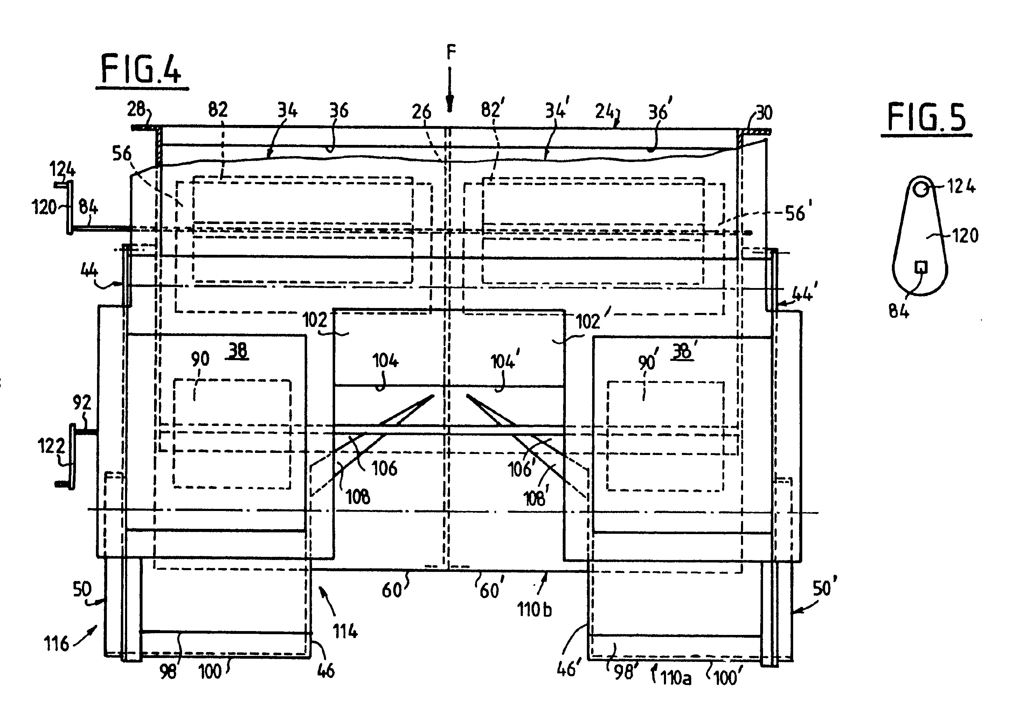

On se réfère maintenant à la figure 4. L'axe 84 qui porte les volets 82 et 82' est commandé par un levier 120 situé du côté du couvercle 116 qui forme la paroi d'extrémité 44. De façon correspondante, l'axe 92 qui porte les volets 90 et 90' est commandé en rotation par un levier 122. Bien entendu, au lieu d'utiliser deux leviers, on peut faire appel à un seul moyen de commande entraînant la rotation des volets 82 et 82' d'une part et des volets 90 et 90' d'autre part par l'intermédiaire de pignons 96, 86, et 94 comme indiqué à la figure 1, lesdits pignons étant, dans ce cas là, disposés dans le couvercle 116. De même les moyens de commande des volets, tels que les leviers 120, 122 ou les pignons 86', 94 ou le pignon 96, peuvent être mus chacun par un actuateur, tel qu'un micro-moteur, les moyens de commande et les actuateurs pouvant être disposés sur ou à l'intérieur du couvercle 116 de façon à former une platine pré-équipée.

De préférence, comme montré à la figure 5, l'axe 84 est un axe de section carrée qui coopère avec un évidement de forme correspondante du levier 120, ce dernier étant muni d'un maneton 124. L'axe 92 est également un axe de section carrée et le levier 122 est identique au levier 120.

On se réfère maintenant à la figure 6 qui concerne une forme de réalisation de l'invention dans laquelle les deux volets de mixage 56 et 56' peuvent être commandés indépendamment l'un de l'autre par des leviers de commande 126 et 128 qui sont également situés du côté du couvercle 116 qui porte la paroi d'extrémité 44. L'axe 58 qui porte le volet 56 est constitué par un tube cylindrique creux qui s'étend sur toute la longueur du volet 56, qui traverse la paroi d'extrémité 44 et qui porte le levier 126. Comme montré à la figure 7, le tube cylindrique formant l'axe 58 est muni de nervures radiales 130, au nombre de quatre dans l'exemple considéré, qui coopèrent avec des évidements correspondants du levier 126 de manière à assujettir en rotation le levier 126 et l'axe 58. Avantageusement, l'axe 58 comporte des nervures correspondantes pour permettre l'assujettissement en rotation du volet 56 et de l'axe 58.

L'axe creux 58 sert de passage à l'axe 58' de commande du volet 56'. Ainsi, l'axe 58' passe successivement à travers la paroi 44', sur toute la longueur du volet 56', traverse ensuite la paroi 26 et s'étend ensuite à travers le tube 58. Avantageusement, l'axe 58' est un axe de section carrée, analogue aux axes 84 et 92 décrits en référence à la figure 8.

Pour permettre la libre rotation de l'axe 58' de section carrée à l'intérieur de l'axe creux 58, il est nécessaire que la diagonale du carré soit de dimension inférieure au diamètre interne de l'axe 58.

On se réfère maintenant à la figure 8.

Dans ce cas particulier, les volets 56 et 56' sont entraînés en synchronisme par l'axe 58' et par le levier 128. Le volet 56 est monté ici sur un axe creux 132 qui s'apparente à l'axe creux 58, si ce n'est qu'il ménage un passage intérieur de section carrée pour laisser le passage à l'axe 58', sans possibilité de rotation de ce dernier dans l'axe 132. De la sorte, les volets 56 et 56' sont bloqués en rotation l'un par rapport à l'autre et leur commande simultanée s'effectue uniquement par le levier 128. Ainsi, les formes de réalisation des figures 6 et 8 peuvent être obtenues avec un maximum de pièces communes.

On comprendra que le boîtier de l'invention peut ainsi servir aussi bien pour un dispositif de chauffage et de ventilation à commande séparée du chauffage aux places avant ou à commande distincte.

## Revendications

1. Boîtier en matière plastique moulée pour dispositif de chauffage et de ventilation, notamment pour véhicule automobile, comprenant deux parties ayant chacune une paroi latérale dont une extrémité est ouverte et dont l'autre extrémité est fermée, lesdites parties étant de forme générale symétrique par rapport à un plan moyen de séparation, chaque partie comprenant une conduite d'entrée d'air frais (32, 32') et des conduites de sortie (34, 34' ; 38, 38' ; 50, 50'), le boîtier (10) étant propre à loger des moyens (56, 56' ; 82, 82' ; 90, 90' ; 74) de réglage de la distribution et de la température de l'air sortant par les conduites de sortie, caractérisé en ce qu'il comprend :
   – un premier demi-boîtier (110) ayant une paroi latérale dont une extrémité est ouverte et dont l'autre extrémité est fermée par une paroi de fond (44'), réalisée d'une seule pièce avec la paroi latérale et propre à constituer une paroi d'extrémité du boîtier ;
   – un deuxième demi-boîtier (114) ayant une paroi latérale dont une extrémité est ouverte et dont l'autre extrémité est fermée par une paroi de fond (26), réalisée d'une seule pièce avec la paroi latérale et propre à venir fermer au moins en partie l'extrémité ouverte du premier demi-boîtier (110); et
   – un couvercle (116) propre à fermer l'extrémité ouverte du deuxième demi-boîtier (114) et à constituer l'autre paroi d'extrémité (44) du boîtier (10).

2. Boîtier selon la revendication 1, dans lequel la paroi latérale du premier demi-boîtier (110) définit une zone de section plus large adjacente à l'extrémité fermée et une zone de section plus étroite adjacente à son extrémité ouverte et dans lequel une paroi transversale (46') relie la zone de section plus large à la zone de section plus étroite, caractérisé en ce que que le premier demi-boîtier (110) est réalisé en deux parties, une partie principale (110a) qui comprend la paroi de fond (44') et une partie de la paroi latérale et une partie intermédiaire (110b) qui comprend ladite paroi intermédiaire (46') et une portion de la paroi latérale proche de l'extrémité ouverte du demi-boîtier (110).

3. Boîtier selon l'une des revendications 1 et 2, destiné à un dispositif de chauffage dans lequel les moyens de réglage comprennent des volets de mixage (56, 56') et des volets de distribution (82, 82' ; 90, 90'), caractérisé en ce que la paroi de fond (44') du premier demi-boîtier, la paroi de fond (26) du deuxième demi-boîtier (114) et le couvercle (116) comportent des orifices de passage pour les axes des volets de mixage et des volets de distribution.

4. Boîtier selon la revendication 3, caractérisé en ce qu'il est propre à recevoir les commandes des volets d'un même côté du boîtier.

5. Boîtier selon la revendication 4, caractérisé en ce que les commandes des volets sont prévues du côté du couvercle (116).

6. Boîtier selon l'une des revendications 1 à 5, caractérisé en ce que les deux conduites d'entrée (32, 32') sont situées adjacentes tout en étant séparées par une cloison de séparation (26) et sont propres à être reliées à la sortie de la volute (16) d'un groupe moto-ventilateur.

7. Procédé d'assemblage d'un boîtier selon l'une des revendications 1 à 6, caractérisé en ce que l'on empile successivement et suivant une seule direction d'abord le premier demi-boîtier (110) ensuite le deuxième demi-boîtier (114) en sorte que son extrémité fermée vienne obturer l'extrémité ouverte du premier demi-boîtier et enfin le couvercle (116) de manière à fermer l'extrémité ouverte du deuxième demi-boîtier (114).

8. Procédé selon la revendication 7, pour l'assemblage d'un boîtier selon la revendication 2, caractérisé en ce que l'on empile successivement la partie principale (110a) du premier demi-boîtier (110), la partie intermédiaire (110b) du premier demi-boîtier (110), le deuxième demi-boîtier (114) et enfin le couvercle (116).

9. Procédé selon l'une des revendications 7 et 8, caractérisé en ce que l'empilement se fait en direction verticale descendante, le premier demi-boîtier (110) étant disposé sur une table avec son extrémité ouverte dirigée vers le haut, les autres éléments du boîtier étant déplacés successivement en direction verticale descendante.

10. Procédé selon l'une des revendications 7 à 9, caractérisé en ce que les éléments du boîtier sont liés ensemble.

## Ansprüche

1. Formplastikgehäuse für ein Heizungs- und Belüftungsgerät, insbesondere für ein Kraftfahrzeug, bestehend aus zwei Teilen; die jeweils eine Seitenwand besitzen, deren eines Ende offen und deren anderes Ende geschlossen ist, wobei die genannten Teile im Verhältnis zu einer mittleren Trennungsebene von allgemein symmetrischer Form sind und jeder Teil eine Lufteinströmleitung (32, 32') sowie Ausströmleitungen (34, 34' ; 38, 38' ; 50, 50') enthält und das Gehäuse (10) zur Aufnahme von Mitteln (56, 56' ; 82, 82' ; 90, 90' ; 74) zur Regelung der Verteilung und der Temperatur der durch die Ausströmleitungen austretenden Luft geeignet ist, **dadurch gekennzeichnet,** daß es folgendes enthält :
   – ein erstes Halbgehäuse (110) mit einer Seitenwand, deren eines Ende offen ist und deren anderes Ende durch eine Rückwand (44') verschlossen ist, die aus einem Stück mit der Seitenwand besteht und geeignet ist, als eine Abschlußwand des Gehäuses zu dienen,
   – ein zweites Halbgehäuse (114) mit einer Seitenwand, deren eines Ende offen ist und deren anderes Ende durch eine Rückwand (26) verschlossen ist, die aus einem Stück mit der Seitenwand besteht und geeignet ist, das offene Ende des ersten Halbgehäuses (110) wenigstens teilweise zu verschließen, und
   – einen Deckel (116), der geeignet ist, das offene Ende des zweiten Halbgehäuses (114) zu verschließen und die andere Abschlußwand (44) des Gehäuses (10) zu bilden.

2. Gehäuse nach Anspruch 1, bei dem die Seitenwand des ersten Halbgehäuses (110) eine an das verschlossene Ende angrenzende Zone von größerem Querschnitt und eine an das offene Ende angrenzende Zone von kleinerem Querschnitt begrenzt und worin eine Querwand (46') die Zone von größerem Querschnitt mit der Zone von kleinerem Querschnitt verbindet, **dadurch gekennzeichnet,** daß das erste Halbgehäuse (110) aus zwei Teilen besteht, einem Hauptteil (110a), der die Rückwand (44') und einen Teil der Seitenwand enthält, und einen Zwischenteil (110b), der die genannte Zwischenwand (46') und einen Teil der Seitenwand enthält, die in Nähe des offenen Endes des Halbgehäuses (110) liegt.

3. Gehäuse nach einem der Ansprüch 1 und 2, bestimmt für ein Heizungsgerät ; dessen Regelvorrichtungen Mischklappen (56, 56') und Verteilerklappen (82, 82' ; 90, 90') einschließen, **dadurch gekennzeichnet,** daß die Rückwand (44') des ersten

Halbgehäuses, die Rückwand (26) des zweiten Halbgehäuses (114) und der Deckel (116) Durchtrittsöffnungen für die Achsen der Mischklappen und der Verteilerklappen aufweisen.

4. Gehäuse nach Anspruch 3, **dadurch gekennzeichnet**, daß es sich zur Aufnahme der Steuerungen für die Klappen einer gleichen Seite des Gehäuses eignet.

5. Gehäuse nach Anspruch 4, **dadurch gekennzeichnet**, daß die Steuerurgen der Klappen auf der Seite des Deckels (116) vorgesehen sind.

6. Gehäuse nach einem der Ansprüche 1 bis 5, **dadurch gekennzeichnet**, daß die beiden Einströmleitungen (32, 32') aneinander angrenzen, jedoch durch eine Trennwand (26) voneinander getrennt sind und sich dazu eignen, mit dem Austritt der Schnecke (16) eines Lüftersatzes verbunden zu werden.

7. Verfahren zur Montage eines Gehäuses nach einem der Ansprüche 1 bis 6, **dadurch gekennzeichnet**, daß man nacheinander und in nur einer Richtung zunächst das erste Halbgehäuse (110) und dann das zweite Halbgehäuse (114) in der Weise aufeinandersetzt, daß das geschlossene Ende das offene Ende des ersten Halbgehäuses verschließt, und schließlich den Deckel (116) in der Weise, daß das offene Ende des zweiten Halbgehäuses (114) verschlossen wird.

8. Verfahren nach Anspruch 7 für die Montage eines Gehäuses nach Anspruch 2, **dadurch gekennzeichnet**, daß man nacheinander den Hauptteil (110a) des ersten Halbgehäuses (110), den Zwischenteil (110b) des ersten Halbgehäuses (110), das zweite Halbgehäuse (114) und schließlich den Deckel (116) aufeinandersetzt.

9. Verfahren nach einem der Ansprüche 7 und 8, **dadurch gekennzeichnet**, daß die Montage vertikal von oben nach unten vonstatten geht, wobei das erste Halbgehäuse (110) mit seinem offenen Ende nach oben auf einem Tisch liegt und die anderen Elemente des Gehäuses nacheinander vertikal von oben nach unten verschoben werden.

10. Verfahren nach einem der Ansprüche 7 bis 9, **dadurch gekennzeichnet**, daß die Elemente des Gehäuses miteinander verbunden werden.

## Claims

1. A moulded plastic casing for a heating and ventilation apparatus, especially for an automobile vehicle, comprising two parts, each comprising a lateral wall, one end of which is open and the other end of which is closed, the said parts having a generally symmetrical shape relative to a middle separating plane, each part comprising a fresh air inlet channel (32, 32') and outlet channels (34, 34' ; 38, 38' ; 50, 50'), the casing (10) being adapted to house means (56, 56' ; 82, 82' ; 90, 90' ; 74) for controlling the distribution and the temperature of the air emerging through the outlet channels, characterized in that it comprises :

  – a first half-casing (110), comprising a lateral wall, one end of which is open and the other end of which is closed by a bottom wall (44') made in one piece with the lateral wall and adapted to constitute an end wall of the casing ;

  – a second half-casing (114), comprising a lateral wall, one end of which is open and the other end of which is closed by a bottom wall (26) made in one piece with the lateral wall and adapted to close, at least partially, the open end of the first half-casing (110) ; and

  – a cover (116) adapted to close the open end of the second half-casing (114) and to constitute the other end wall (44) of the casing (10).

2. A casing according to claim 1, wherein the lateral wall of the first half-casing (110) defines a region having a wider cross-section next to the closed end and a region having a narrower cross-section next to its open end and in which a transverse wall (46') connects the region having a wider cross-section to the region having a narrower cross-section, characterized in that the first half-casing (110) is made in two parts, a main part (110a), which comprises the bottom wall (44') and a part of the lateral wall, and an intermediate part (110b) which comprises the said intermediate wall (46') and a portion of the lateral wall close to the open end of the half-casing (110).

3. A casing according to Claims 1 or Claim 2, intended for a heating device in which the control means comprise mixing flaps (56, 56') and distribution flaps (82, 82' ; 90, 90'), characterized in that the bottom wall (44') of the first half-casing, the bottom wall (26) of the second half-casing (114) and the cover (116) comprise openings for receiving the spindles of the mixing flaps and the distribution flaps.

4. A casing according to claim 3, characterized in that it is adapted to receive the controls for the flaps from the same side of the casing.

5. A casing according to claim 4, characterized in that the controls for the flaps are provided on the side comprising the cover (116).

6. A casing according to any one of claims 1 to 5, characterized in that the two inlet channels (32, 32') are adjacent whilst being separated by a separating wall (26) and are adapted to be connected to the outlet of the volute (16) of a motor ventilator unit.

7. A process for assembling a casing of the kind claimed in any one of claims 1 to 6, characterized in that the following are successively stacked together in the same direction, first of all the first half-casing (110), then the second half-casing (114), so that its closed end closes off the open end of the first half-casing, and finally the cover (116) so as to close the open end of the second half-casing (114).

8. A process according to claim 7, for assembling a casing as described in claim 2, characterized in that

15 EP 0 288 379 B1 16

the main part (110a) of the first half-casing (110), the intermediate part (110b) of the first half-casing (110), the second half-casing (114), and finally the cover (116) are successively stacked together.

9. A process according to any one of claims 7 and 8, characterized in that the stacking is performed in a vertically downward direction, the first half-casing (110) being disposed on a table with its open end directed upwards, the other elements of the casing being successively put in place in a vertically downward direction.

10. A process according to any one of claims 7 to 9, characterized in that the elements of the casing are connected together.

9

FIG.1

FIG. 2

EP 0 288 379 B1

## FIG.3

FIG.4

FIG.5

EP 0 288 379 B1

## FIG.6

## FIG.7

## FIG.8

## FIG.9

EP 0 288 379 B1